(19) Europäisches Patentamt
European Patent Office
Office européen des brevets

(11) Veröffentlichungsnummer: **0 530 767 A2**

# (12) EUROPÄISCHE PATENTANMELDUNG

(21) Anmeldenummer: **92114979.5**

(22) Anmeldetag: **02.09.92**

(51) Int. Cl.5: **C08L 45/00**, C08L 51/06, C08L 59/00

(30) Priorität: **03.09.91 DE 4129170**
**20.03.92 DE 4209063**

(43) Veröffentlichungstag der Anmeldung:
**10.03.93 Patentblatt 93/10**

(84) Benannte Vertragsstaaten:
**AT BE DE ES FR GB IT NL**

(71) Anmelder: **HOECHST AKTIENGESELLSCHAFT**
**Postfach 80 03 20**
**W-6230 Frankfurt am Main 80(DE)**

(72) Erfinder: **Epple, Ulrich, Dr.**
**Alter Höchster Weg 8**
**W-6236 Eschborn(DE)**
Erfinder: **Brekner, Michael-Joachim, Dr.**
**Geisenheimer Strasse 90**
**W-6000 Frankfurt/M. 71(DE)**
Erfinder: **Cherdron, Harald, Prof. Dr.**
**Eichenweg 40**
**W-6200 Wiesbaden(DE)**

## (54) Polymerlegierungen aus Cycloolefinpolymeren und Polyacetalen.

(57) Polymerlegierungen werden aus Cycloolefinpolymeren oder Cycloolefincopolymeren sowie Polyacetalen durch gemeinsames Kneten oder Extrusion hergestellt. Vorzugsweise enthält das Cycloolefinpolymer Struktureinheiten, die sich von einem Monomeren der Formel I ableiten.

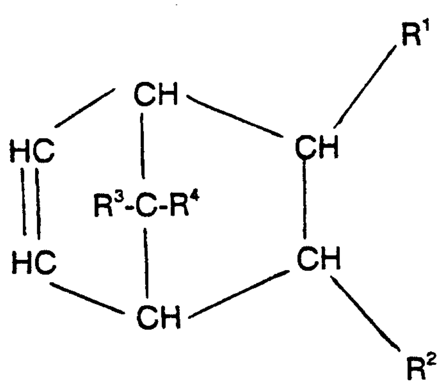

(I) .

EP 0 530 767 A2

Cycloolefinpolymere sind eine Polymerklasse mit herausragendem Eigenschaftsniveau, die sich u.a. durch hydrolytische Stabilität, geringe Wasseraufnahme, Witterungsbeständigkeit, hohe Wärmeformbeständigkeit und Transparenz auszeichnen.

Auch Polyacetale werden seit langem als vielseitige Werkstoffe vor allem im technischen Bereich eingesetzt. Sie eignen sich wegen ihrer guten mechanischen Eigenschaften wie hoher Steifigkeit, Härte und Festigkeit sowie der Möglichkeit Formteile und Formkörper in engen Toleranzgrenzen herzustellen und der guten Beständigkeit gegenüber vielen Chemikalien vielfach als Metallersatz. Neben den guten elektrischen und dielektrischen Eigenschaften zeigen sie günstiges Gleit- und Verschleißverhalten. Infolge der guten Beständigkeit von Polyacetalen gegen viele organische Lösungsmittel weisen sie nur eine geringe Quellung und eine geringe Abnahme ihrer mechanischen Eigenschaften im Kontakt mit Lösungsmitteln auf. In der Praxis ist besonders die Beständigkeit gegen Autobenzin (auch methanolhaltiges), Mineralöl und Heizöl von Bedeutung, was bei den Cycloolefinpolymeren nicht gewährleistet ist.

Beide Polymerklassen, Cycloolefinpolymere und Polyacetale werden thermoplastisch verarbeitet. Hohe und zeitlich lange thermische Belastungen führen bei den Cycloolefinpolymeren zu Zersetzungs- und Oxidationsprodukten. Kürzere thermische Belastungsintervalle, d.h. höhere Ausstoßleistungen durch Verbesserung der Fließfähigkeit, beim Extrudieren bzw. Spritzgießen wären deshalb von Vorteil. Für einige Anwendungen der Polyacetale, beispielsweise als Matrixmaterialien für Composites, sind deren mechanische Eigenschaften beispielsweise der E-Modul bzw. der Schubmodul weiterhin verbesserungsbedürftig. In diesem Zusammenhang ist die Wasseraufnahme der Polyacetale störend, da die Dimensionsstabilität bei hoher Umgebungsfeuchtigkeit nicht gewährieistet ist. Eine geringere Wasseraufnahme wäre daher von Vorteil.

Es ist nun bekannt, daß wichtige Eigenschaften von Polymeren, wie die obengenannten verändert werden können, in dem man Polymere mit anderen Polymeren legiert. Man ist bis heute jedoch weit davon entfernt, die Eigenschaften einer Polymerlegierung aus den Eigenschaften der Einzelkomponenten gesichert vorhersagen zu können.

Aufgabe der vorliegenden Erfindung ist es daher, Polymerlegierungen aus Cycloolefinpolymeren und Polyacetalen mit erhöhter Fließfähigkeit, Verbesserung der mechanischen Eigenschaften und geringerer Wasseraufnahme bereitzustellen.

Gegenstand der Erfindung sind Polymerlegierungen enthaltend mindestens zwei Komponenten (A) und (B), dadurch gekennzeichnet, daß

(A) mindestens ein Cycloolefinpolymer und

(B) mindestens ein Polyacetal ist,

wobei (A) in Mengen von 1 bis 99 Gew.-% und (B) in Mengen von 99 bis 1 Gew.-% enthalten sind und sich die Mengen von (A) und (B), relativ in Bezug auf die Gesamtlegierung auf 100 Gew.-% ergänzen.

Für die Legierungen gemäß der Erfindung geeignete Cycloolefinpolymere (A) enthalten Struktureinheiten, die von mindestens einem Monomeren der Formeln I bis VI oder VII

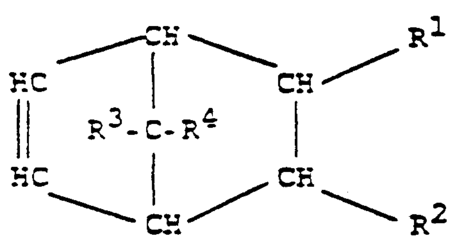

(I),

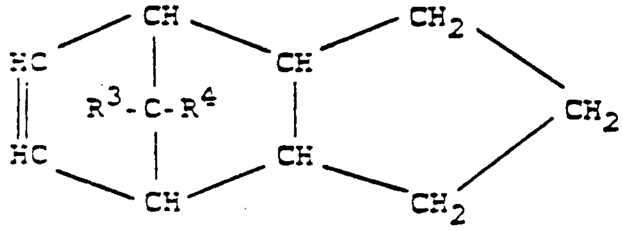

(II),

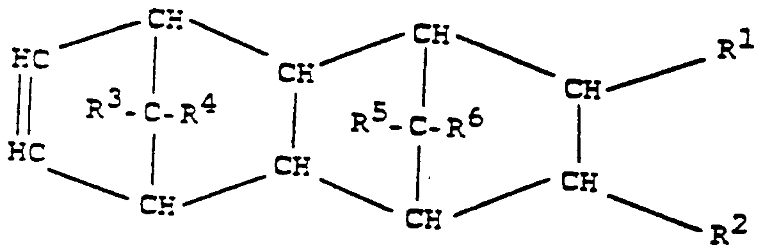

(III),

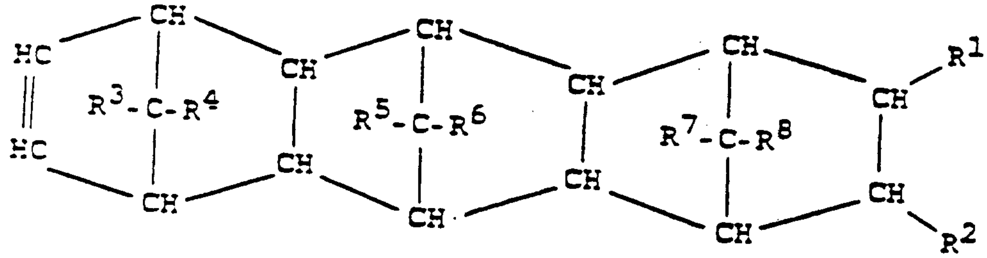

(IV),

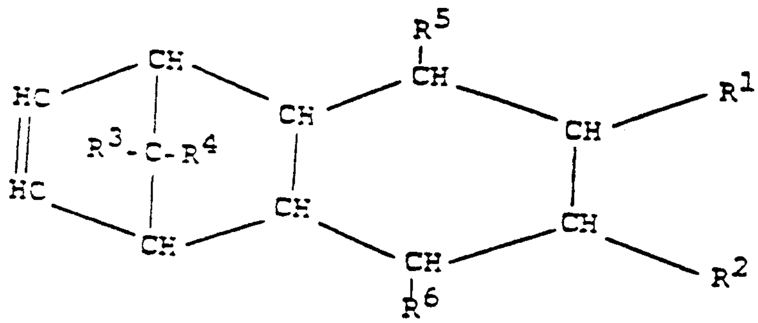

(V),

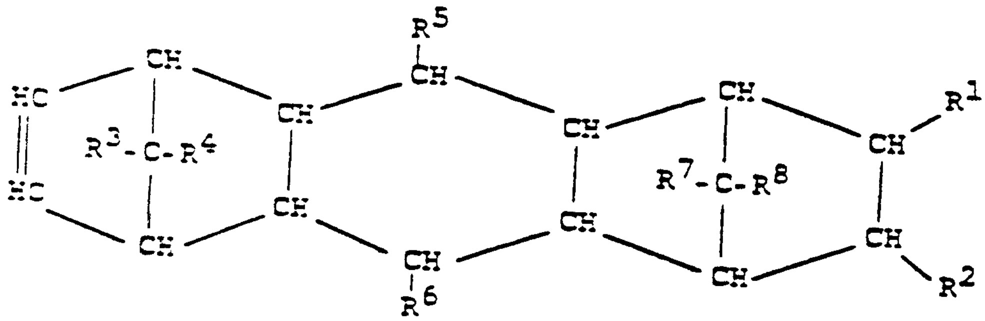

(VI),

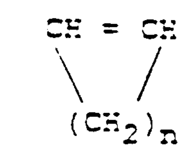

(VII)

abgeleitet sind, worin $R^1$, $R^2$, $R^3$, $R^4$, $R^5$, $R^6$, $R^7$ und $R^8$ gleich oder verschieden sind und ein Wasserstoffatom oder einen $C_1$-$C_8$-Alkylrest bedeuten, wobei gleiche Reste in den verschiedenen Formeln eine unterschiedliche Bedeutung haben können und n eine ganze Zahl von 2 bis 10 ist.

Die Cycloolefinpolymere (A) können neben den Struktureinheiten, die von mindestens einem Monomeren der Formeln I bis VII abgeleitet sind,weitere Struktureinheiten enthalten, die von mindestens einem acyclischen 1-Olefin der Formel VIII

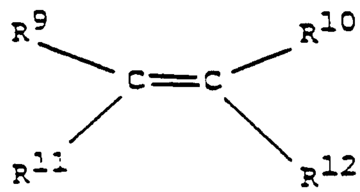

(VIII)

abgeleitet sind, worin $R^9$, $R^{10}$, $R^{11}$ und $R^{12}$ gleich oder verschieden sind und ein Wasserstoffatom oder einen $C_1$-$C_8$-Alkylrest bedeuten.

Bevorzugte Comonomere sind Ethylen oder Propylen. Es werden insbesondere Copolymere aus polycyclischen Olefinen der Formeln I oder III, und den acyclischen Olefinen der Formeln VIII, eingesetzt. Besonders bevorzugte Cycloolefine sind Norbornen und Tetracyclododecen, die durch $C_1$-$C_6$-Alkyl substituiert sein können, wobei Ethylen-Norbornen-Copolymere von besonderer Bedeutung sind. Von den monocyclischen Olefinen der Formel VII ist Cyclopenten, das substituiert sein kann, bevorzugt. Als polycyclische Olefine, monocyclische Olefine und offenkettige Olefine sind auch Gemische zweier oder mehrerer Olefine des jeweiligen Typs zu verstehen. Das heißt, es können Cycloolefinhomo- und -copolymere wie Bi-, Ter- und Multipolymere eingesetzt werden.

Es ist bekannt, daß Cycloolefine mittels verschiedener Katalysatoren polymerisiert werden können. Dabei verläuft die Polymerisation in Abhängigkeit vom Katalysator über Ringöffnung (US-A-3 557 072, US-A-4 178 424) oder unter Öffnung der Doppelbindung (EP-A-156464, EP-A-283164, EP-A-291208, EP-A-291970, DE-A-3922546).

Die unter Öffnung der Doppelbindung verlaufenden Cycloolefinpolymerisationen können mit neueren Katalysatorsystemen (DE-A-39 22 546, EP-A- 02 03 799) als auch mit einem klassischen Ziegler-Katalysatorsystem katalysiert werden (DD-A-222317, DD-A-239409).

Die Cycloolefinhomo- und copolymere, die Struktureinheiten abgeleitet von Monomeren der Formeln I bis VI oder VII enthalten, werden bevorzugt mit Hilfe eines homogen löslichen Katalysators, bestehend aus einem Metallocen, dessen Zentralatom ein Metall aus der Gruppe Titan, Zirkon, Hafnium, Vanadium, Niob und Tantal ist, welches mit zwei miteinander verbrückten ein- oder mehrkernigen Liganden eine Sandwichstruktur bildet, und einem Aluminoxan, hergestellt. Die Darstellung der verbrückten Metallocene erfolgt nach einem bekannten Reaktionsschema (vgl. J. Organomet. Chem. 288 (1985) 63-7 und EP-A-320762). Das als Cokatalysator fungierende Aluminoxan ist nach verschiedenen Methoden erhältlich (vgl. S. Pasynkiewicz, Polyhedron 9 (1990) 429 und EP-A-302424). Die Struktur als auch die Polymerisation dieser Cycloolefine ist ausführlich in der DE-A-3 922 546 und in den prioritätsälteren, noch nicht vorveröffentlichten Patentanmeldungen (DE-A-40 36 264, DE-A-41 06 107 und DE-A-41 07 682) beschrieben. Hierbei handelt es sich um Cycloolefincopolymere, die sich in ihrer chemischen Einheitlichkeit und ihrer Polydispersität unterscheiden.

Bevorzugt werden Cycloolefinpolymere mit einer Viskositätszahl größer 20 $cm^3/g$ (gemessen in Dekalin bei 135 °C in einer Konzentration von 0,1 g/100 ml) und einer Glastemperatur Tg) zwischen 100 und 200 °C eingesetzt.

Die Polymerlegierungen können auch Cycloolefinpolymere enthalten, die unter Ringöffnung in Gegenwart beispielsweise von wolfram-, molybdän-, rhodium- oder rheniumhaltigen Katalysatoren polymerisiert wurden. Die dabei erhaltenen Cycloolefinpolymere besitzen Doppelbindungen, die durch Hydrierung entfernt werden können (US-A-3 557 072 und US-A-4 178 424).

Die für die Polymerlegierungen gemäß der Erfindung eingesetzten Cycloolefinpolymere können auch durch Pfropfung mit mindestens einem Monomeren, ausgewählt aus der Gruppe (a) der $\alpha$-, $\beta$- ungesättigten Carbonsäuren und ihrer Derivate, (b) der Styrole, (c) der organischen Silikonkomponenten enthaltend eine ungesättigte, bevorzugt olefinische, Bindung und eine hydrolisierbare Gruppe und (d) der ungesättigten Epoxykomponenten, modifiziert sein. Die erhaltenen modifizierten Cycloolefinpolymere haben ähnlich exzellente Eigenschaften wie die unmodifizierten Cycloolefinpolymeren und können sowohl allein als auch neben den unmodifizierten Cycloolefinpolymeren für die Legierungen gemäß der Erfindung eingesetzt werden. Darüber hinaus besitzen die modifizierten Cycloolefinpolymere speziell eine gute Adhäsion zu Metallen und synthetischen Polymeren. Hervorzuheben ist die gute Kompatibilität mit anderen Polymeren. Es ist sogar möglich, durch in Lösung bzw. in Schmelzen erfolgte Reaktionen, Pfropfcopolymere aus Cycloolefinpolymeren mit Polyacetalen herzustellen, die als Phasenvermittler wirken können.

Für die Polymerlegierungen gemäß der Erfindung geeignete Polyacetale (B) enthalten Oxymethylenstruktureinheiten [-$CH_2$-O-] mit bevorzugtem Anteil von 80-100 Gew.%, vorzugsweise 90-100 Gew.%. Derartige Polyacetale (B) werden z.B. in EP-A-0 156 285 beschrieben. Bevorzugte Polyacetale (B) sind

lineare, unverzweigte Homo- und Copolymere aus Formaldehyd oder seinen cyclischen Oligomeren wie Trioxan oder Tetroxan, wobei unter Copolymeren sowohl Bi- als auch Multipolymere zu verstehen sind.

Geeignete Comonomere sind a) cyclische Ether mit 3,4 oder 5, vorzugsweise 3, Ringgliedern, b) von Tri- oder Tetroxan verschiedene cyclische Acetale mit 5 bis 11, vorzugsweise 5, 6, 7 oder 8, Ringgliedern und c) lineare Polyacetale, jeweils in Mengen von 0,1 bis 20 Gew.%, vorzugsweise 0,5 bis 10 Gew.%. Besonders bevorzugte Copolymere enthalten 99,5 bis 95 Gew.% Oxymethylenstruktureinheiten und 0,5 bis 5 Gew.% Struktureinheiten abgeleitet von einem der vorgenannten Comonomeren.

Unter Homo- und Copolymeren des Formaldehyds oder seiner cyclischen Oligomeren sind solche Polymere zu verstehen, deren Endgruppen nach der Polymerisation zu stabilen Gruppen umgesetzt werden.

Die Herstellung der Polyacetale (B) erfolgt durch ionische Polymerisation. Das Homopolymerisat von Polyoxymethylen kann durch anionische Suspensionspolymerisation von Formaldehyd hergestellt werden. Zur Stabilisierung der instabilen Halbacetalendgruppen wird anschließend eine Veresterung mit Essigsäureanhydrid bei ca. 140 °C durchgeführt. Zur Herstellung von Copolymeren wird zunächst aus ca. 60 %iger wäßriger Formalinlösung in Gegenwart von Schwefelsäure Trioxan hergestellt. Das durch Destillation sorgfältig gereinigte monomere Trioxan kann dann in Gegenwart einiger Gewichtsprozent Ethylenoxid oder 1,3-Dioxepan (Butandiolformal) bei ca. 70 °C kationisch in Substanz polymerisiert werden. Die instabilen Halbacetalendgruppen des erhaltenen Copolymeren werden schließlich in stabile alkoholische Endgruppen überführt. Eine übersichtliche Darstellung der wesentlichen Verfahrensschritte und Wertung der Vielzahl von Patenten und Veröffentlichungen wird in Process Economic Program (G.E. Haddeland, Report No. 69, Acetal Resins, Stanford Research Institute, Menlo Park, California 1971) gegeben.

Die inhärente Viskosität der Polyacetale (B) beträgt im allgemeinen 0,3 bis 2,0 dl/g, vorzugsweise 0,5 bis 1,5 dl/g (gemessen in Butyrolacton, stabilisiert mit 2 Gew.-% Diphenylamin bei 140 °C in einer Konzentration von 0,5 g/100 ml) und die Volumen-Fließ-Indizes (Melt Volume Index = MVI), bestimmt nach DIN 53735-B, betragen im allgemeinen 0,02 bis 70 $cm^3$/10 Minuten, gemessen bei 190 °C und einer Belastung von 2,16 kg. Der Kristallitschmelzpunkt (Tm) beträgt im allgemeinen 140-180 °C, vorzugsweise 150-170 °C.

Die für die Legierungen gemäß der Erfindung eingesetzten Polyacetale können auch durch Pfropfung mit geeigneten funktionellen Verbindungen, bestehend aus Diisocyanaten als Kopplungsagentien und entsprechenden funktionellen Verkappungsagentien, modifiziert sein. Unter dem Begriff "funktionelle Verkappungsagentien" versteht man monomere oder polymere Verbindungen mit einer oder zwei funktionellen Gruppen pro Kette, beispielsweise Hydroxyl-, Carboxy- oder Amingruppen, die Additionsreaktionen mit Diisocyanaten eingehen können. Geeignete funktionelle Verkappungsagentien sind z.B. mono- und difunktionelle Polyalkylenoxide, Polyester, Polyamide, Polyolefine, Polydiene und Polysiloxane. Durch Pfropfung modifizierte Polyacetale werden in EP-A-0 397 493 beschrieben.

Diese Block- oder Pfropfcopolymere können als "engineering resins" per se oder als Phasenvermittler mit anderen Polymeren eingesetzt werden.

Die erfindungsgemäßen Legierungen enthalten bevorzugt 5 bis 95 Gew.-%, besonders bevorzugt 10 bis 90 Gew.-%, der Cycloolefinpolymere (A) und umgekehrt 95 bis 5 Gew.-% bzw. 90 bis 10 Gew.-% der Polyacetale (B), wobei sich die Anteile der Komponenten A und B, relativ in Bezug auf die Gesamtlegierung auf 100 Gew.-% ergänzen. Die erfindungsgemäßen Legierungen können ein oder mehrere Cyloolefinpolymere und ein oder mehrere Polyacetale sowie modifizierte Cycloolefinpolymere, modifizierte Polyacetale und/oder Block- und/oder Pfropfcopolymere dieser enthalten.

Legierungen, die modifizierte Cycloolefinpolymere neben unmodifizierten Cycloolefinpolymeren und Polyacetalen enthalten, zeigen beispielsweise feinere Dispergierung, d.h. kleinere Teilchengrößen. Feinste Dispergierung tritt bei Legierungen auf, bei denen der gesamte Anteil an Cycloolefinpolymeren modifiziert ist. Diese Legierungen weisen auch überraschend gute mechanische Eigenschaften auf.

Die erfindungsgemäßen Legierungen werden durch für Thermoplasten bekannte Standardmethoden hergestellt und verarbeitet, z.B. durch Kneten, Extrusion oder Spritzguß.

Die erfindungsgemäßen Legierungen können Additive enthalten, beispielsweise thermische Stabilisatoren, UV-Stabilisatoren, Antistatika, Flammschutzmittel, Plastifizierer, Gleit- und Schmiermittel, Pigmente, Farbstoffe, optische Aufheller, Verarbeitungshilfsmittel, anorganische und organische Füllstoffe, d.h. insbesondere auch verstärkende Zusätze wie Glas-, Kohle- oder Hochmodulfasern.

Die Legierungen können vorteilhaft als Matrixmaterial für Verbundwerkstoffe eingesetzt werden. Sie eignen sich außerdem zur Herstellung von Formkörpern nach dem Spritzguß- oder Extrusionsverfahren, beispielsweise in Form von Platten, Fasern, Folien und Schläuchen.

Es wurden folgende Polymere nach Standardmethoden hergestellt:

Cycloolefincopolymer A1 [COC A1]

A) Darstellung von Diphenylmethylen(9-fluorenyl)-cyclopentadienyl-zirkondichlorid - (Metallocen L)

Alle nachfolgenden Arbeitsoperationen sind in Inertgasatmosphäre unter Verwendung absolutierter Lösemittel durchgeführt worden (Schlenk-Technik).

Eine Lösung von 5,1 g (30,7 mmol) Fluoren in 60 $cm^3$ THF wurde bei Raumtemperatur mit 12,3 $cm^3$ (30,7 mmol) einer 2,5 molaren Hexanlösung von n-Butyllithium langsam versetzt. Nach 40 Minuten wurde die orange Lösung mit 7,07 g (30,7 mmol) Diphenylfulven versetzt und über Nacht gerührt. Zur dunkelroten Lösung wurden 60 $cm^3$ Wasser zugesetzt, wobei sich die Lösung gelb färbte, die mit Diethylether ausgeschüttelt wurde. Die über $MgSO_4$ getrocknete Etherphase wurde eingeengt und bei -35 °C der Kristallisation überlassen. Man erhielt 5,1 g (42 Gew.-%) 1,1-Cyclopentadienyl-(9-fluorenyl)-diphenylmethan als beiges Pulver.

2,0 g (5,0 mmol) der Verbindung wurden in 20 $cm^3$ THF gelöst und bei 0 °C mit 6,4 $cm^3$ (10 mmol) einer 1,6 molaren Lösung von Butyllithium in Hexan versetzt. Nach 15 Minuten Rühren bei Raumtemperatur wurde das Lösemittel bei vermindertem Druck entfernt, der rote Rückstand im Ölpumpenvakuum getrocknet und mehrmals mit Hexan gewaschen. Nach dem Trocknen im Ölpumpenvakuum wurde das rote Pulver bei -78 °C zu einer Suspension von 1,16 g (5,00 mmol) $ZrCl_4$ in 20 ml $CH_2Cl_2$ gegeben. Nach dem langsamen Aufwärmen wurde der Ansatz noch 2 h bei Raumtemperatur gerührt. Die rosafarbene Suspension wurde über eine G3-Fritte filtriert. Der rosarote Rückstand wurde mit 20 $cm^3$ $CH_2Cl_2$ gewaschen, im Ölpumpenvakuum getrocknet und mit 120 $cm^3$ Toluol extrahiert. Nach Entfernen des Lösemittels bei vermindertem Druck und Trocknen im Ölpumpenvakuum erhielt man 0,55 g des Zirkon-Komplexes in Form eines rosaroten Kristallpulvers.

Das orangerote Filtrat des Reaktionsansatzes wurde eingeengt und bei -35 °C der Kristallisation überlassen. Aus $CH_2Cl_2$ kristallisieren weitere 0,45 g des Komplexes.

Gesamtausbeute 1,0 g (36 Gew.-%). Korrekte Elementaranalysen. Das Massenspektrum zeigte $M^+$ = 556. $^1$H-NMR-Spektrum (100 MHz, $CDCl_3$): 6,90-8,25 (m, 16, Flu-H, Ph-H), 6,40 (m, 2, Ph-H), 6,37 (t, 2, Cp-H), 5,80 (t, 2, Cp-H).

B) Herstellung von COC A1 (Ethylen-Norbornen-Copolymer)

Ein sauberer und trockener 75-$dm^3$-Polymerisationsreaktor mit Rührer wurde mit Stickstoff und dann mit Ethylen gespült und mit 30 l einer 85 Gew.%igen toluolischen Norbonenlösung (Nb) gefüllt. Unter Rühren wurde dann der Reaktor auf eine Temperatur von 70 °C gebracht und Ethylen wurde bis zur Einstellung eines Drucks von 3,5 bar eingeleitet.

Danach wurden 580 $cm^3$ toluolische Methylaluminoxanlösung (10,1 Gew.-% Methylaluminoxan mit Molmasse 1300 g/mol nach kryoskopischer Bestimmung) in den Reaktor dosiert und die Mischung 15 Minuten bei 70 °C gerührt, wobei durch Nachdosieren der Ethylendruck bei 3,5 bar gehalten wurde. Parallel dazu wurden 500 mg Metallocen L in 500 $cm^3$ toluolischer Methylaluminoxanlösung (Konzentration und Qualität siehe oben) gelöst und durch 15 minütiges Stehenlassen voraktiviert. Dann wurde die Lösung des Komplexes (Katalysatorlösung) in den Reaktor dosiert. Wasserstoff kann zur Regelung des Molekulargewichtes verwendet werden. Unter Rühren (750 Umdrehungen/Minute) wurde dann 140 Minuten bei 70 °C polymerisiert, wobei der Druck im Reaktor durch Nachdosieren von Ethylen bei 3,5 bar gehaften wurde. Dann wurde der Reaktorinhalt schnell m ein Rührgefäß abgelassen, in dem 200 $cm^3$ Isopropanol (als Stopper) vorgelegt waren. Die Mischung wurde in Aceton ausgefällt, 10 Minuten gerührt und der suspendierte polymere Feststoff abfiltriert.

Das abfiltrierte Polymer wurde dann mit einer Mischung aus zwei Teilen 3-normaler Salzsäure und einem Teil Ethanol versetzt und 2 Stunden gerührt. Das Polymer wurde erneut abfiltriert, mit Wasser neutral gewaschen und bei 80 °C und 0,2 bar 15 Stunden getrocknet. Es wurde eine Produktmenge von 4500 g erhalten.

Cycloolefincopolymere A2 [COC A2] und A3 [COC A3]

A) Darstellung von rac-Dimethylsilyl-bis-(1-indenyl)-zirkondichlorid (Metallocen A)

Alle nachfolgenden Arbeitsoperationen sind in Inertgasatmosphäre unter Verwendung absolutierter Lösemittel durchgeführt worden (Schlank-Technik).

Eine Lösung von 30 g (0,23 mol) über Aluminiumoxid filtriertem Inden (techn. 91 %) in 200 $cm^3$ Diethylether wurde unter Eiskühlung mit 80 $cm^3$ (0,20 mol) einer 2,5-molaren Lösung von n-Butyllithium in Hexan versetzt. Man rührte den Ansatz noch 15 Minuten bei Raumtemperatur und gab die orangefarbene Lösung über eine Kanüle innerhalb 2 Stunden zu einer Lösung von 13,0 g (0,10 mol) Dimethyldichlorsilan (99 %ig) in 30 $cm^3$ Diethylether. Die orangefarbene Suspension wurde über Nacht gerührt und dreimal mit 100-150 $cm^3$ Wasser ausgeschüttelt. Die gelbe organische Phase wurde zweimal über Natriumsulfat getrocknet und im Rotationsverdampfer eingedampft. Das verbleibende orange Öl wurde 4 bis 5 Stunden im Ölpumpenvakuum bei 40 °C gehalten und von überschüssigem Inden befreit, wobei ein weißer Niederschlag ausfiel. Durch Zugabe von 40 $cm^3$ Methanol und Kristallisation bei -35 °C ließen sich insgesamt 20,4 g (71 Gew.-%) der Verbindung $(CH_3)_2Si(Ind)_2$ als weißes bis beiges Pulver isolieren. Fp. 79-81 °C (2 Diastereomere).

Eine Lösung von 5,6 g (19,4 mmol) $(CH_3)_2Si(Ind)_2$ in 40 $cm^3$ THF wurde bei Raumtemperatur langsam mit 15,5 $cm^3$ (38,7 mmol) einer 2,5-molaren Hexanlösung von Butyllithium versetzt. Eine Stunde nach Beendigung der Zugabe wurde die tiefrote Lösung innerhalb 4-6 Stunden zu einer Suspension von 7,3 g (19,4 mmol) $ZrCl_4 \cdot 2$ THF in 60 $cm^3$ THF zugetropft. Nach 2 Stunden Rühren wurde der orange Niederschlag über eine Glasfritte abgesaugt und aus $CH_2Cl_2$ umkristallisiert. Man erhielt 1,0 g (11 Gew.-%) rac-$(CH_3)_2Si(Ind)_2ZrCl_2$ in Form oranger Kristalle, die sich ab 200 °C allmählich zersetzen. Korrekte Elementaranalysen. Das Massenspektrum zeigte $M^+$ = 448. $^1$H-NMR-Spektrum ($CDCl_3$): 7,04-7,60 (m, 8, arom. H), 6,90 (dd, 2, $\beta$-Ind H), 6,08 (d, 2, $\alpha$-Ind H), 1,12 (s, 6, $SiCH_3$).

B) Herstellung von COC A2 bzw. COC A3 (Ethylen-Norbornen-Copolymere)

Die Herstellung von COC A2 bzw. COC A3 erfolgte analog zu COC A1, wobei einige in Tabelle 1 zusammengefaßte Bedingungen geändert wurden.

Tabelle 1

| Cyclo-olefin-copolymer | Norbornen-Lösung 85 Gew.-%ig [l] | T [°C] | $H_2$-Dosierung [l/h] | Druck [bar] | Metallocen Art | Metallocen Menge [mg] | Kat.-Lösung [ml] | Polym.-Zeit [Min.] | Menge Produkt [g] |
|---|---|---|---|---|---|---|---|---|---|
| A2 | 31 | 70 | 0,5 | 12 | A | 520 | 750 | 180 | 4400 |
| A3 | 32 | 70 | 1,0 | 25 | A | 470 | 500 | 220 | 4600 |

Metallocen A: rac-Dimethylsilyl-bis-(1-indenyl)-zirkondichlorid

Die physikalischen Kenndaten der drei Cycloolefincopolymere, die Struktureinheiten der Formeln F1 und F2 enthalten,

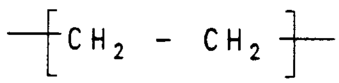

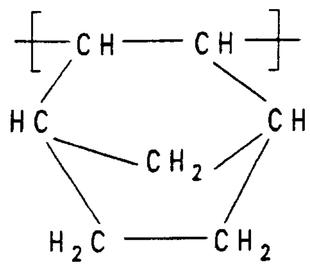

F 1 F 2

sind Tabelle 2 zu entnehmen.

Tabelle 2

| Cycloolefincopolymer | Einbau* von Ethylen | Norbornen | Vz [$cm^3/g$] | <Mw> • $10^{-5}$ [g/mol] | <Mn> • $10^{-4}$ [g/mol] | <Mw> ----<Mn> | Tgø [° C] |
|---|---|---|---|---|---|---|---|
| | [Mol-%] | [Mol-%] | | | | | |
| A1 | 49 | 51 | 166 | 2,25 | 10,2 | 2,2 | 178 |
| A2 | 55 | 45 | 91 | 0,92 | 4,5 | 2,0 | 143 |
| A3 | 59 | 41 | 83 | 0,82 | 3,5 | 2,3 | 114 |

* ermittelt durch $^{13}C$-kernmagnetische Resonanzspektroskopie
VZ: Viskositätszahl gemäß DIN 53728 ermittelt
<Mw>, <Mn>: GPC: 150-C ALC Millipore Waters Chromatograph
Säulensatz: 4 Shodex-Säulen AT-80 M/S
Lösemittel: o-Dichlorbenzol bei 135 ° C
Durchfluß: 0,5 ml/Min., Konzentration 0,1 g/dl
RI-Detektor, Kalibrierung: Polyethylen (901 PE)
ø Aufheiz- und Abkühlgeschwindigkeit: 20 ° /Minute

Weitere Charakteristika der Cycloolefincopolymere A1, A2 und A3 sind den Beispielen zu entnehmen.

Cycloolefinpfropfcopolymere A3-P1* [COC A3-P1] und A3-P2+ [COC A3-P2+] und A3-P3 [COC A3-P3]

1. Herstellung von mit Maleinsäureanhydrid gepfropftem COC A3 (A3-P1 * und A3-P2+)

In einem sauberen und trockenen 500 ml Zweihalskolben, angeschlossen an eine Inertgasanlage (bestehend aus einer Ölpumpe zur Erzeugung eines Hochvakuums und einer Argonzuleitung zur Belüftung), wurden 20 g (108,1 g/l) COC A3 in 150 ml Toluol (thiophenfrei, absolutiert) gelöst. Nachdem das Copolymer vollständig gelöst war, wurden 8 g (438,6 mmol/l) Maleinsäureanhydrid (MSA, 99 %ig) zugegeben und gelöst, bevor 2 g (27,1 mmol/l) Dilauroylperoxid (gelöst in 35 ml Toluol (thiophenfrei, absolutiert)) zugegeben wurden. Der Inhalt wurde vollständig bei -196 ° C entgast (vier Einfrier- Entgasungszyklen). Danach wurde Argon aufgebracht und die Reaktionslösung in ein auf 80 ° C vortemperiertes Ölbad gegeben.

Die radikalische Pfropfung von MSA auf COC A3 wurde nach 5 1/2 Stunden durch

Ausfällen in 2 l Aceton beendet. Zur Aufarbeitung, d.h. Reinigung des Polymeren, wurde dieses viermal in Aceton umgefällt, wobei nach Trocknung bei 130 ° C (72 h/Ölpumpenvakuum) 16,3 g MSA-gepfropftes Cycloolefincopolymer A3 (A3-P1*) erhalten wurde.

Die Herstellung von A3-P2+ erfolgte analog, wobei 2,8 g (38,0 mmol/l) Dilauroylperoxid eingesetzt wurden. Ausbeute: 15,9 g

FT-IR [$cm^{-1}$]: 1865 ss / 1790 ss (C = O, Anhydrid)
VZ [$cm^3/g$]: nach DIN 53728

A3-P1*: 85,7; A3-P2 + : 84,2

2. Herstellung von mit Maleinsäureanhydrid gepfropftem COC A3 (A3-P3)

Einen sauberen und trockenen 2 l Zweihalskolben befüllte man mit Argon. Im Argongegenstrom wurden 70 g (90,0 g/l) COC A3 gelöst in 700 ml Toluol (absolutiert) eingefüllt. Danach wurden im Inertgasgegenstrom 19,0 g (250,3 mmol/l) Maleinsäureanhydrid (MSA, 99 %ig) zugegeben und gelöst, bevor 6,68 g (21,8 mmol/l) Dilauroylperoxid (gelöst in 70 ml Toluol (absolutiert)) gleichfall im Argongegenstrom zugegeben wurden. Die Reaktionslösung wurde in ein auf 80 °C vortemperiertes Ölbad gegeben und mit einem KPG-Rührer kräftig gerührt. Die radikalische Pfropfung von MSA auf COC A3 wurde nach 5 1/2 Stunden durch Ausfällen in 5 l Aceton beendet. Zur Aufarbeitung, d.h. Reinigung des Polymeren, wurde dieses viermal in Aceton umgefällt, wobei nach Trocknung bei 130 °C (72 h/Ölpumpenvakuum) 66 g MSA-gepfropftes Cycloolefincopolymer A3 (A3-P3) erhalten wurde.

FT-IR [$cm^{-1}$]: 1865 ss / 1790 ss (C = O, Anhydrid)
VZ [$cm^3/g$]: nach DIN 53728
A3-P3: 86,7

Mit Hilfe der potentiometrischen Titration wurden die absoluten Gehalte an MSA im Pfropfcopolymer bestimmt.

Tabelle 3

| Probe | Gehalt MSA [Gew.-%] | mittlere Anzahl MSA/Polymerkette A3 |
|---|---|---|
| A3-P1* | 1,07 | 4 |
| A3-P2 + | 1,95 | 7 |
| A3-P3 | 0,64 | 2 |

Polyacetal B mit Struktureinheiten der Formel F3 und F4

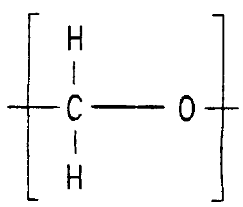
F 3

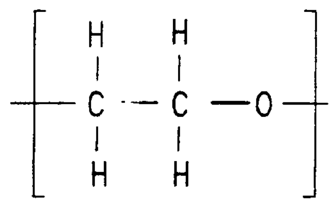
F 4

worin der Anteil der Oxymethylenstruktureinheiten 98 Gew.-% und der Anteil der Oxyethylenstruktureinheiten 2 Gew.-% beträgt.

Derartiges Polyacetal B kann kommerziell erworben werden. Es wird beispielsweise als ®Hostaform C 2521 (® = eingetragenes Warenzeichen) von der Fa. Hoechst AG, Frankfurt am Main vertrieben.

Die oben beschriebenen Polymere wurden zunächst getrocknet (130 °C, 24 h, Vakuum) und anschließend in verschiedenen Gewichtsverhältnissen in einem Meßkneter (Fa. HAAKE (Karlsruhe), Rheocord System 40/Rheomix 600) bzw. Meßextruder (Fa. HAAKE (Karlsruhe), Rheocord System 90/Rheomex TW 100) unter Schutzgas (Ar) geknetet bzw. extrudiert. Die erhaltenen gemahlenen bzw. granulierten Legierungen wurden getrocknet (130 °C, 24 h, Vakuum) und anschließend zu Platten (120 x 1 mm) verpreßt (Vakuumpresse: Polystat 200 S, Fa. Schwabenthan (Berlin)). In die auf 230 °C (Blends mit A1 und A2) bzw. 190 °C (Blends mit A3 und Pfropfcopolymeren A3-P1* und A3-P2 + bzw. den Blends mit Pfropfcopolymer A3-P3) vorgeheizte Presse wurden die gemahlenen bzw. granulierten Legierungen eingebracht, Vakuum gezogen und 10 Minuten aufgeschmolzen. Bei obiger Temperatur wurde das Material bei einem Anpreßdruck von 150 bar zusammengepreßt, dieser Druck wurde 5 Minuten beibehalten und danach erfolgte innerhalb von 10 Minuten Abkühlung auf Raumtemperatur. Die erhaltenen Schmelzpreßplatten wurden auf ihre physikalischen Eigenschaften hin untersucht.

Dazu wurden folgende Geräte verwendet:

Ein Differential-Scanning-Calorimeter (DSC-7) der Firma Perkin-Elmer (Überlingen) zur Messung beispielsweise von Glasstufen, Schmelzpunkten und Schmelzwärmen.
Ein Torsionspendelautomat der Firma Brabender (Duisburg) zur Messung von Schubmodul, Dämpfung und Längenausdehnung.
Eine Zug-Dehnungs-Prüfmaschine (Typ: Instron 4302) der Firma Instron (Offenbach).
Ein Schmelzindex-Prüfgerät MPS-D der Firma Goettfert (Buchen) zur Messung von Fließfähigkeiten nach DIN 53735-MVI-B (Stempellast/Temperatur variabel; Zylinder: Innenmaß 9,55 (± 0,01) mm, Länge mindestens 115 mm, Austrittsdüse 2,095 (± 0,005) mm, Aufschmelzzeit 5 oder 10 Minuten).
Der Wassergehalt wurde nach ASTM D 4019-81 bestimmt.

Beispiel 1:

Mittels des Meßkneters wurden das Cycloolefincopolymere (A1) und das Polyacetal (B) in verschiedenen Gewichtsverhältnissen nach intensiver Trocknung gemeinsam unter Argonatmosphäre geknetet. Nachstehende Tabelle zeigt die ermittelten thermischen Eigenschaften der Legierungen.

| COC A1 [Gew.-%] | POM B [Gew.-%] | Kühlen Tm POM B [°C] | Kühlen dHm POM B [J/g] | 2. Heizen Tm POM B [°C] | 2. Heizen dHm POM B [J/g] | 2. Heizen Tg COC [°C] |
|---|---|---|---|---|---|---|
| 100 | 0 | -- | -- | -- | -- | 178 |
| 70 | 30 | 141 | 43,8 | 168 | 37,7 | 179 |
| 50 | 50 | 140 | 88,7 | 168 | 75,9 | * |
| 30 | 70 | 141 | 125,5 | 167 | 114,7 | * |
| 0 | 100 | 142 | 168,4 | 168 | 171,2 | - |

Aufheiz- und Abkühlgeschwindigkeit: 20°/Minute

* nicht meßbar (Geräteempfindlichkeit zu gering)

Beispiel 2:

Mittels des Meßkneters wurden das Cycloolefincopolymere (A1) und das Polyacetal (B) in verschiedenen Gewichtsverhältnissen nach intensiver Trocknung gemeinsam unter Argonatmosphäre geknetet und anschließend gemahlen. Die Mahlprodukte wurden nach intensiver Trocknung zur Messung der Fließfähigkeiten verwendet.

| COC A1 [Gew.-%] | POM B [Gew.-%] | MVI 21,6 kg/230 ° C [cm$^3$/10 Minuten] Aufschmelzzeit 5 Min. |
|---|---|---|
| 100 | 0 | 23,5 |
| 70 | 30 | 110,6 |
| 50 | 50 | 305,7 |
| 30 | 70 | 391,1 |
| 0 | 100 | 74,4 |

Beispiel 3:

Mittels des Zweischneckenextruders wurden das Cycloolefincopolymere (A2) und das Polyacetal (B) in verschiedenen Gewichtsverhältnissen nach intensiver Trocknung gemeinsam unter Argonatmosphäre extrudiert und granuliert. Das Granulat wurde nach intensiver Trocknung zur Messung der Fließfähigkeiten verwendet.

| COC A2 [Gew.-%] | POM B [Gew.-%] | MVI 21,6 kg/220 ° C [cm$^3$/10 Minuten] Aufschmelzzeit 5 Min. |
|---|---|---|
| 100 | 0 | 14,2 |
| 70 | 30 | 198,9 |
| 50 | 50 | 445,4 |
| 30 | 70 | nicht meßbar (> 450) |
| 0 | 100 | 62,0 |

Beispiel 4:

Mittels des Zweischneckenextruders wurden das Cycloolefincopolymere (A2) und das Polyacetal (B) in verschiedenen Gewichtsverhältnissen nach intensiver Trocknung gemeinsam unter Argonatmosphäre extrudiert und granuliert. Die Granulate wurden anschließend nach intensiver Trocknung zu Preßplatten verpreßt. Nachstehende Tabelle zeigt die ermittelten mechanischen Daten der Legierungen beim Zug-/Dehnungsexperiment.

| COC A2 [Gew.-%] | POM B [Gew.-%] | Elastizitätsmodul [GPa] | Reißspannung [MPa] |
|---|---|---|---|
| 100 | 0 | 3,2 | 62 |
| 70 | 30 | 3,0 | 59 |
| 50 | 50 | 2,8 | 58 |
| 30 | 70 | 2,9 | 58 |
| 0 | 100 | 2,8 | 58 |

Beispiel 5:

Mittels des Meßkneters wurden das Cycloolefincopolymere (A3) und das Polyacetal (B) in verschiedenen Gewichtsverhältnissen nach intensiver Trocknung gemeinsam unter Argonatmosphäre geknetet. Nachstehende Tabelle zeigt die ermittelten thermischen Eigenschaften der Legierungen.

| COC A3 [Gew.-%] | POM B [Gew.-%] | Kühlen Tm POM B [°C] | Kühlen dHm POM B [J/g] | 2. Heizen Tm POM B [°C] | 2. Heizen dHm POM B [J/g] | 2. Heizen Tg COC [°C] |
|---|---|---|---|---|---|---|
| 100 | 0 | -- | -- | -- | -- | 114 |
| 70 | 30 | 142 | x | 168 | x | 114 |
| 50 | 50 | 141 | x | 167 | x | * |
| 30 | 70 | 142 | x | 168 | x | * |
| 0 | 100 | 142 | 168,4 | 168 | 171,2 | - |

Aufheiz- und Abkühlgeschwindigkeit: 20°C/Minute

x Abtrennung nicht möglich (Schmelzpunkt, Glasstufe)

* nicht meßbar (Geräteempfindlichkeit zu gering)

Beispiel 6:

Mittels des Meßkneters wurden das Cycloolefincopolymere (A3) und das Polyacetal (B) in verschiedenen Gewichtsverhältnissen nach intensiver Trocknung gemeinsam unter Argonatmosphäre geknetet. Die Mahlprodukte wurden intensiv getrocknet und nach mindestens 240-stündiger Lagerung bei 23° C und 85 % relativer Feuchtigkeit die Wasseraufnahme bestimmt.

| COC A3 [Gew.-%] | POM B [Gew.-%] | Wassergehalt [Gew.-%] |
|---|---|---|
| 100 | 0 | 0,01 |
| 70 | 30 | 0,10 |
| 50 | 50 | 0,16 |
| 30 | 70 | 0,29 |
| 0 | 100 | 0,41 |

Beispiel 7:

Mittels des Meßkneters wurden das Cycloolefincopolymere (A3) und das Polyacetal (B) in verschiedenen Gewichtsverhältnissen nach intensiver Trocknung gemeinsam unter Argonatmosphäre geknetet. Die Mahlprodukte wurden intensiv getrocknet und zu Preßplatten verpreßt. Nachstehende Tabelle zeigt die mechanischen Daten der Legierungen beim Torsionspendelversuch.

| COC A3 [Gew.-%] | POM B [Gew.-%] | Schubmodul G' (Torsionspendel) [N/mm*mm] Temperatur [°C] | | | | | | | | | | | |
|---|---|---|---|---|---|---|---|---|---|---|---|---|---|
| | | -141 | -61 | -31 | 20 | 40 | 56 | 70 | 85 | 101 | 111 | 120 | 140 |
| 100 | 0 | 1541 | 1083 | 1050 | 983 | 950 | 914 | 870 | 821 | 715 | 505 | -- | -- |
| 70 | 30 | 1626 | 1077 | 996 | 890 | 834 | 781 | 733 | 682 | 592 | 415 | -- | -- |
| 50 | 50 | 2105 | 1264 | 1085 | 912 | 833 | 747 | 671 | 609 | 526 | 379 | 114 | 29 |
| 30 | 70 | 2736 | 1550 | 1248 | 1007 | 889 | 753 | 638 | 549 | 446 | 330 | 151 | 67 |
| 0 | 100 | 3787 | 1947 | 1388 | 1022 | 866 | 695 | 576 | 477 | 378 | 310 | 249 | 148 |

Beispiel 8:

Mittels des Meßkneters wurden das Cycloolefincopolymere (A3) und das Polyacetal (B) in verschiedenen Gewichtsverhältnissen nach intensiver Trocknung gemeinsam unter Argonatmosphäre geknetet. Die Mahlprodukte wurden nach intensiver Trocknung zur Messung der Fließfähigkeiten verwendet.

| COC A3 [Gew.-%] | POM B [Gew.-%] | MVI 21,6 kg/190 ° C [cm³/10 Minuten] Aufschmelzzeit 5 Min. |
|---|---|---|
| 100 | 0 | 15,3 |
| 70 | 30 | 89,4 |
| 50 | 50 | 159,0 |
| 30 | 70 | 189,3 |
| 0 | 100 | 38,2 |

Beispel 9:

Mittels des Meßkneters wurden das Cycloolefincopolymere (A3), das Pfropfcopolymere A3-P1* bzw. A3-P2+ und das Polyacetal (B) in verschiedenen Gewichtsverhältnissen nach intensiver Trocknung gemeinsam unter Argonatmosphäre geknetet. Nachstehende Tabelle zeigt die ermittelten thermischen Eigenschaften der Legierungen.

| COC A3 [Gew.-%] | COC A3-P1*/2+ [Gew.-%] | POM B [Gew.-%] | Kühlen Tm POM B [°C] | Kühlen dHm POM B [J/g] | 2. Heizen Tm POM B [°C] | 2. Heizen dHm POM B [J/g] | 2. Heizen Tg COC [°C] |
|---|---|---|---|---|---|---|---|
| 100 | 0 | 0 | -- | -- | -- | -- | 114 |
| 70 | 0 | 30 | 142 | x | 167 | x | 114 |
| 56 | 14* | 30 | 142 | x | 167 | x | 113 |
| 18 | 12+ | 70 | 143 | x | 167 | x | V |
| 30 | 0 | 70 | 142 | x | 167 | x | V |
| 0 | 0 | 100 | 142 | 168,4 | 168 | 171,2 | -- |

Aufheiz- und Abkühlgeschwindigkeit: 20°C/Minute

x Abtrennung nicht möglich (Schmelzpunkt, Glasstufe)

V nicht meßbar (Geräteempfindlichkeit zu gering)

Beispiel 10:

Mittels des Meßkneters wurden das Cycloolefincopolymere (A3), das Pfropfcopolymere (A3-P1* bzw. A3-P2+) (Phasenvermittler) und das Polyacetal (B) in verschiedenen Gewichtsverhältnissen nach intensiver Trocknung gemeinsam unter Argonatmosphäre geknetet. Die Mahlprodukte wurden nach intensiver Trocknung zur Messung der Fließfähigkeiten verwendet.

| COC A3 [Gew.-%] | COC A3-P1*/-P2+ [Gew.-%] | POM B [Gew.-%] | MVI 21,6 kg/190 °C [$cm^3$/10 Minuten] Aufschmelzzeit: 5 / 10 Min. |
|---|---|---|---|
| 100 | 0 | 0 | 15,3 / 15,5 |
| 70 | 0 | 30 | 89,4 / 96,7 |
| 56 | 14* | 30 | 64,3 / 71,2 |
| 18 | 12+ | 70 | 171,6 / 181,6 |
| 30 | 0 | 70 | 189,3 / 188,9 |
| 0 | 0 | 100 | 38,2 / 37,2 |

Beispiel 11:

Mittels des Meßkneters wurden das Cycloolefincopolymere (A3), das Pfropfcopolymere (A3-P1* bzw. A3-P2+) und das Polyacetal (B) in verschiedenen Gewichtsverhältnissen nach intensiver Trocknung gemeinsam unter Argonatmosphäre geknetet. Die Mahlprodukte wurden nach intensiver Trocknung zu Preßplatten verpreßt. Nachstehende Tabelle zeigt die ermittelten mechanischen Daten der Legierungen mit/ohne Phasenvermittler (A3-P1* bzw. A3-P2+) beim Torsionspendelversuch.

| COC A3 [Gew.-%] | COC A3-P1* A3-P2+ [Gew.-%] | POM B [Gew.-%] | Schubmodul G' (Torsionspendel) [N/mm*mm] Temperatur [°C] | | | | | | | | | | | |
|---|---|---|---|---|---|---|---|---|---|---|---|---|---|---|
| | | | -141 | -61 | -31 | 20 | 40 | 56 | 70 | 85 | 101 | 111 | 120 | 140 |
| 100 | 0 | 0 | 1541 | 1083 | 1050 | 983 | 950 | 914 | 870 | 821 | 715 | 505 | -- | -- |
| 70 | 0 | 30 | 1626 | 1077 | 996 | 890 | 834 | 781 | 733 | 682 | 592 | 415 | -- | -- |
| 56 | 14* | 30 | 1858 | 1194 | 1075 | 942 | 875 | 807 | 753 | 698 | 585 | 398 | -- | -- |
| 18 | 12+ | 70 | 2716 | 1599 | 1275 | 1013 | 906 | 776 | 689 | 595 | 475 | 334 | 168 | 70 |
| 30 | 0 | 70 | 2736 | 1550 | 1248 | 1007 | 889 | 753 | 638 | 549 | 446 | 330 | 151 | 67 |
| 0 | 0 | 100 | 3787 | 1947 | 1388 | 1022 | 866 | 695 | 576 | 477 | 378 | 310 | 249 | 148 |

Beispiel 12:

Mittels des Meßkneters wurden das Cycloolefincopolymere (A3), das Pfropfcopolymere (A3-P1* bzw. A3-P2+) und das Polyacetal (B) in verschiedenen Gewichtsverhältnissen nach intensiver Trocknung gemeinsam unter Argonatmosphäre geknetet. Die Mahlprodukte wurden nach intensiver Trocknung zu

Preßplatten verpreßt. Nachstehende Tabelle zeigt die ermittelten mechanischen Daten der Legierungen mit/ohne Phasenvermittler (A3-P1* bzw. A3-P2 + ) beim Zug-/Dehnungsexperiment.

| COC A3 [Gew.-%] | COC A3-P1* A3-P2 + [Gew.-%] | POM B [Gew.-%] | Elastizitätsmodul [GPa] | Reißspannung [MPa] | Reißdehnung [%] |
|---|---|---|---|---|---|
| 100 | 0 | 0 | 3,1 | 60 | 4,9 |
| 70 | 0 | 30 | 2,9 | 57 | 5,0 |
| 56 | 14* | 30 | 3,0 | 57 | 3,6 |
| 18 | 12 + | 70 | 2,8 | 60 | 10,2 |
| 30 | 0 | 70 | 2,8 | 56 | 5,4 |
| 0 | 0 | 100 | 2,8 | 58 | 35,0 |

Beispiel 13:

Mittels des Meßkneters wurden das Pfropfcopolymere A3-P3 und das Polyacetal (B) in verschiedenen Gewichtsverhältnissen nach intensiver Trocknung gemeinsam unter Argonatmosphäre geknetet. Nachstehende Tabelle zeigt die ermittelten thermischen Eigenschaften der Legierungen.

| COC A3-P3 [Gew.-%] | POM B [Gew.-%] | Kühlen Tm POM B [°C] | Kühlen dHm POM B [J/g] | 2. Heizen Tm POM B [°C] | 2. Heizen dHm POM B [J/g] | 2. Heizen Tg COC [°C] |
|---|---|---|---|---|---|---|
| 100 | 0 | -- | -- | -- | -- | 113 |
| 70 | 30 | 83/114⁺ | x | 162 | 33 | 112 |
| 30 | 70 | 143 | x | 168 | x | V |
| 0 | 100 | 142 | 168,4 | 168 | 171,2 | - |

Aufheiz- und Abkühlgeschwindigkeit: 20 °C/Minute

x Abtrennung nicht möglich (Schmelzpunkt, Glasstufe)

V nicht meßbar (Geräteempfindlichkeit zu gering)

\+ mehrere Minima (2. Hauptminimum)

Beispiel 14:

Mittels des Meßkneters wurden das Pfropfcopolymere A3-P3 und das Polyacetal (B) in verschiedenen Gewichtsverhältnissen nach intensiver Trocknung gemeinsam unter Argonatmosphäre geknetet. Die Mahlprodukte wurden nach intensiver Trocknung zur Messung der Fließfähigkeiten verwendet.

| COC A3-P3 [Gew.-%] | POM B [Gew.-%] | MVI 21,6 kg/190 ° C [$cm^3$/10 Minuten] Aufschmelzzeit 5 / 10 Min. | |
|---|---|---|---|
| 100 | 0 | 14,6 | 14,8 |
| 70 | 30 | 7,8 | 7,9 * |
| 30 | 70 | 9,3 | 7,0 |
| 0 | 100 | 38,2 | 37,2 |

* schaumartiges Material

Beispiel 15:

Mittels des Meßkneters wurden das Cycloolefincopolymere A3, bzw. das Pfropfcopolymere A3-P3 und das Polyacetal (B) in verschiedenen Gewichtsverhältnissen nach intensiver Trocknung gemeinsam unter Argonatmosphäre geknetet. Die Mahlprodukte wurden nach intensiver Trocknung zu Preßplatten verpreßt. Nachstehende Tabelle zeigt die ermittelten mechanischen Daten der Legierungen beim Torsionspendelversuch.

| COC A3 [Gew.-%] | COC A3-P3 [Gew.-%] | POM B [Gew.-%] | Schubmodul G' (Torsionspendel) [N/mm*mm] Temperatur [°C] | | | | | | | | | | | |
|---|---|---|---|---|---|---|---|---|---|---|---|---|---|---|
| | | | -141 | -61 | -31 | 20 | 40 | 56 | 70 | 85 | 101 | 111 | 120 | 140 |
| 100 | 0 | 0 | 1541 | 1083 | 1050 | 983 | 950 | 914 | 870 | 821 | 715 | 505 | -- | -- |
| 0 | 100 | 0 | 1442 | 1053 | 1020 | 946 | 906 | 867 | 835 | 798 | 666 | 372 | -- | -- |
| 70 | - | 30 | 1626 | 1077 | 996 | 890 | 834 | 781 | 733 | 682 | 592 | 415 | -- | -- |
| - | 70 | 30 | 1834 | 1216 | 1119 | 990 | 919 | 851 | 797 | 740 | 619 | 416 | -- | -- |
| - | 30 | 70 | 2768 | 1586 | 1291 | 1028 | 899 | 764 | 680 | 586 | 464 | 323 | 162 | 69 |
| 30 | - | 70 | 2736 | 1550 | 1248 | 1007 | 889 | 753 | 638 | 549 | 446 | 330 | 151 | 67 |
| 0 | 0 | 100 | 3787 | 1947 | 1388 | 1022 | 866 | 695 | 576 | 477 | 378 | 310 | 249 | 148 |

Beispiel 16:

Mittels des Meßkneters wurden das Pfropfcopolymere A3-P3 und das Polyacetal (B) in verschiedenen Gewichtsverhältnissen nach intensiver Trocknung gemeinsam unter Argonatmosphäre geknetet. Die Mahlprodukte wurden nach intensiver Trocknung zu Preßplatten verpreßt. Nachstehende Tabelle zeigt die ermittelten mechanischen Daten der Legierungen beim Zug-/Dehnungsexperiment.

| COC A3-P3 [Gew.-%] | POM B [Gew.-%] | Elastizitätsmodul [GPa] | Reißspannung [MPa] | Reißdehnung [%] |
|---|---|---|---|---|
| 100 | 0 | 3,1 | 61 | 5,0 |
| 70 | 30 | 2,9 | 56 | 7,9 |
| 30 | 70 | 2,9 | 58 | 17,8 |
| 0 | 100 | 2,8 | 58 | 35,0 |

## Patentansprüche

1. Polymerlegierung enthaltend mindestens zwei Komponenten (A) und (B), dadurch gekennzeichnet, daß
   (A) mindestens ein Cycloolefinpolymer und
   (B) mindestens ein Polyacetal ist,
   wobei (A) in Mengen von 1 bis 99 Gew.-% und (B) in Mengen von 99 bis 1 Gew.-% enthalten sind und sich die Mengen von (A) und (B), relativ in Bezug auf die Gesamtlegierung auf 100 Gew.-% ergänzen.

2. Polymerlegierung gemäß Anspruch 1, dadurch gekennzeichnet, daß das Cycloolefinpolymer (A) Struktureinheiten enthält, die von mindestens einem Monomeren der Formeln I bis VI oder VII

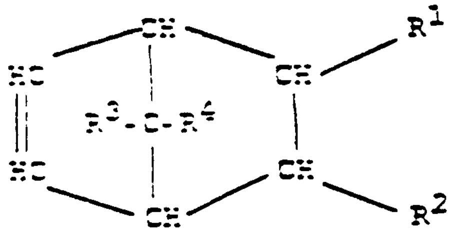

(I),

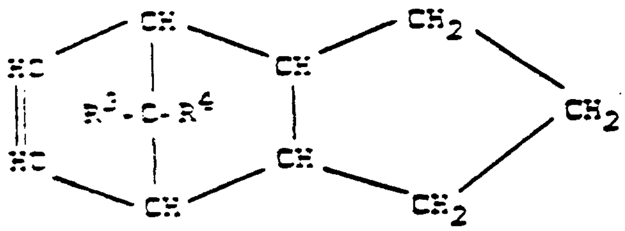

(II),

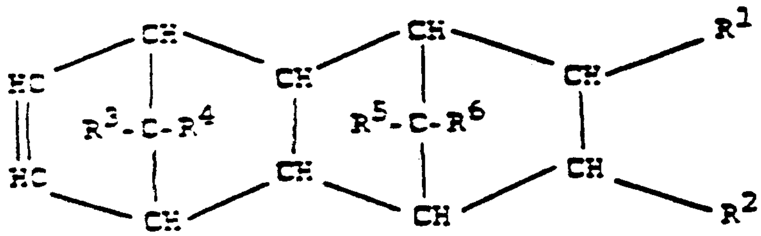

(III),

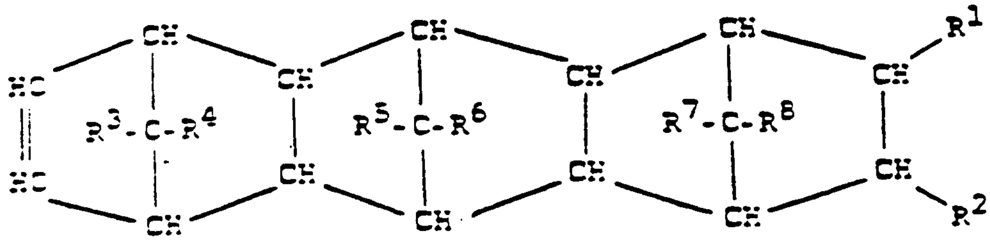

(IV),

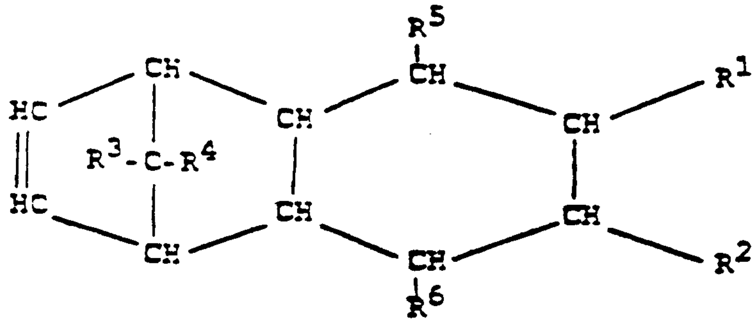

(V),

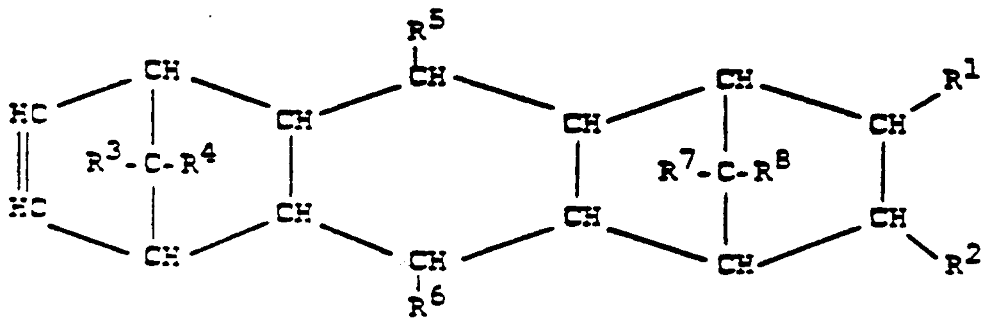

(VI),

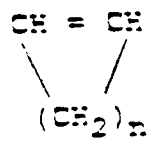

(VII)

abgeleitet sind, worin $R^1$, $R^2$, $R^3$, $R^4$, $R^5$, $R^6$, $R^7$ und $R^8$ gleich oder verschieden sind und ein Wasserstoffatom oder einen $C_1$-$C_8$-Alkylrest bedeuten wobei gleiche Reste in den verschiedenen Formeln eine unterschiedliche Bedeutung haben können und n eine ganze Zahl von 2 bis 10 ist.

**3.** Polymerlegierung gemäß Anspruch 2, dadurch gekennzeichnet, daß das Cycloolefinpolymer (A) durch Pfropfung mit mindestens einem Monomeren, ausgewählt aus der Gruppe (a) der $\alpha$-, $\beta$- ungesättigten Carbonsäuren und ihrer Derivate, (b) der Styrole, (c) der organischen Silikonkomponenten, enthaltend eine ungesättigte Bindung und eine hydrolisierbare Gruppe, und (d) der ungesättigten Epoxykomponenten modifiziert ist.

**4.** Polymerlegierung gemäß einem der Ansprüche 2 oder 3, dadurch gekennzeichnet, daß das Cycloolefinpolymer (A) neben den Struktureinheiten, die von mindestens einem Monomeren der Formeln I bis VII abgeleitet sind, weitere Struktureinheiten enthalten, die von mindestens einem acyclischen 1-Olefin der Formel VIII

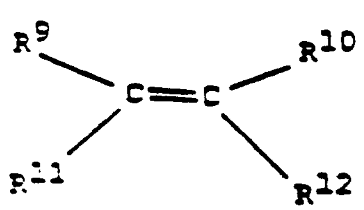

(VIII)

abgeleitet sind, worin $R^9$, $R^{10}$, $R^{11}$ und $R^{12}$ gleich oder verschieden sind und ein Wasserstoffatom oder einen $C_1$-$C_8$-Alkylrest bedeuten.

**5.** Polymerlegierung gemäß Anspruch 4, dadurch gekennzeichnet, daß das Cycloolefinpolymer (A) ein Copolymer aus polycyclischen Olefinen der Formeln I oder III und den acyclischen Olefinen der Formel VIII ist.

**6.** Polymerlegierung gemäß Anspruch 5, dadurch gekennzeichnet daß das Cycloolefinpolymer (A) ein Copolymer aus Norbornen und Ethylen ist.

**7.** Polymerlegierung gemäß Anspruch 1, dadurch gekennzeichnet, daß das Polyacetal (B) Oxymethylenstruktureinheiten [-$CH_2$-O-] in einem Anteil von 80 - 100 Gew.% enthält.

**8.** Polymerlegierung gemäß Anspruch 7, dadurch gekennzeichnet daß das Polyacetal (B) neben den Oxymethylenstruktureinheiten Struktureinheiten abgeleitet von Comonomeren, ausgewählt aus der Gruppe der a) cyclischen Ether mit 3, 4 oder 5 Ringgliedern, b) der von Tri- oder Tetroxan verschiedenen cyclischen Acetale mit 5 bis 11 Ringgliedern und c) der linearen Polyacetale, enthält.

**9.** Polymerlegierung gemäß Anspruch 8, dadurch gekennzeichnet, daß der Anteil der Oxymethylenstruktureinheiten 99,5 bis 95 Gew.% und der Anteil der Struktureinheiten abgeleitet von den genannten Comonomeren 0,5 bis 5 Gew.% beträgt, mit der Maßgabe, daß sich die verschiedenen Anteile auf 100 Gew.% ergänzen.

**10.** Polymerlegierung gemäß Anspruch 9, dadurch gekennzeichnet daß das Polyacetal (B) Oxymethylen- und Oxyethylenstruktureinheiten enthält.

**11.** Polymerlegierung gemäß Anspruch 1, dadurch gekennzeichnet, daß das Cycloolefinpolymer (A) ein Copolymer mit Struktureinheiten der Formeln

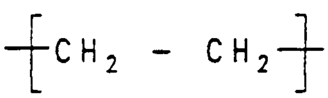

und

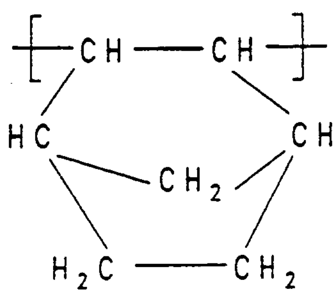

F 1 F 2

ist und das Polyacetal (B) ein Copolymer mit Struktureinheiten der Formeln

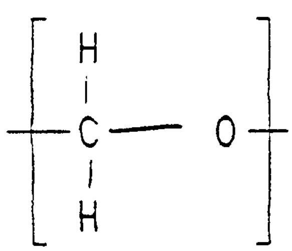

und

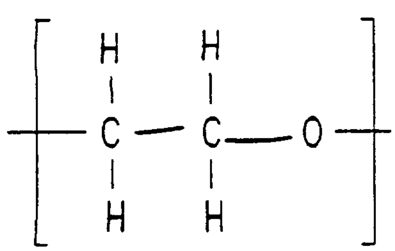

F 3 F 4

ist.

**12.** Polymerlegierung gemäß einem der Ansprüche 1 oder 11 dadurch gekennzeichnet, daß zusätzlich ein durch Pfropfung mit mindestens einem Monomeren, ausgewählt aus der Gruppe (a) der α-, β-ungesättigten Carbonsäuren und ihrer Derivate, (b) der Styrole, (c) der organischen Silikonkomponenten, enthaltend eine ungesättigte Bindung und eine hydrolisierbare Gruppe, und (d) der ungesättigten Epoxykomponenten, modifiziertes Cycloolefinpolymer (A) enthalten ist.

**13.** Polymerlegierung gemäß Anspruch 11, dadurch gekennzeichnet, daß zusätzlich ein durch Pfropfung mit Maleinsäureanhydrid modifiziertes Cycloolefincopolymer (A) enthalten ist.

**14.** Polymerlegierung gemäß Anspruch 1, dadurch gekennzeichnet, daß das Cycloolefinpolymer (A) ein durch Pfropfung mit Maleinsäureanhydrid modifiziertes Cycloolefincopolymer (A) ist und das Polyacetal (B) ein Copolymer mit Struktureinheiten der Formel

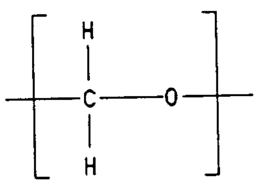

und

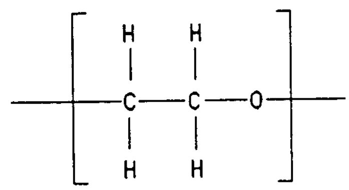

ist.

**15.** Verwendung einer Polymerlegierung gemäß Anspruch 1 als Matrixmaterial für Verbundwerkstoffe oder zur Herstellung von Formkörpern.